# EUROPEAN PATENT APPLICATION

(11) **EP 2 025 301 A1**
(43) Date of publication of application: **18.02.2009**
(21) Application number: 08252696.3
(22) Date of filing: 14.08.2008
(51) Int. Cl.: A61C 1/07, A61C 3/03, A61C 5/02, A61C 17/02

(54) **A system for irrigation of a tooth root canal**

(30) Priority: 14.08.2007 US 893070
(71) Applicant: Johnson, Douglas B., Tulsa, OK 74114 (US)
(72) Inventor: Johnson, Douglas B., Tulsa, OK 74114 (US)
(74) Representative: Pluckrose, Anthony William

(57) **Abstract**

A system for irrigating a tooth root canal having a manually manipulatible tubular hand piece assembly that includes an ultrasonic generator and a removable angular tubular body terminating in an injection needle dimensioned and configured for insertion into a tooth root canal and a pressure source of irrigation fluid connected to the tubular hand piece, the irrigation fluid having ultrasonic energy imposed thereon as it passes through the hand piece angular tubular body and injection needle into a tooth root canal.

## Description

This invention relates to endodontic root canal preparation achieved by simultaneous liquefaction and acoustic debridgement and for an improved system for irrigation of a tooth root canal.

This invention relates to dental instruments and particularly to endodontic instruments, systems and procedures for treating a tooth root canal in which the root canal is cleansed of bacteriological materials by physical and acoustic debridgement and flushing with an irrigation solution, particularly the apparatus and equipment for providing irrigation to remove diseased and necrotic tissue.

Endodontic has become an important part of dentistry. Whereas, prior to the common use of endodontic procedures, an abscessed tooth was typically treated only by extraction of the tooth. However since the advancement of endodontics abscessed teeth can be successfully treated to permit retention by a patient for greatly increased health and physiological benefit. Endodontics has been one of the great advancements in modem medicine.

The endodontic preparation of a root canal typically includes opening the root canal through the coronal area of the tooth and thereafter manipulating files and reamers within the root canal to physically remove as much as possible of the pulpal material. This pulpal material is typically infected or necrotic, that is, dead material and any such material that remains in the root canal after the procedure is completed is a source of potential infection. For this reason the proper treatment of a root canal attempts to remove as much of such necrotic pulpal material as is possible. By use of files and reamers, a substantial portion of such pulpal material can be removed however it is virtually impossible in most cases to remove all such material by physical manipulation of tools within the canal. For this reason, in recent times procedures have been developed wherein the root canal is irrigated or flushed with a fluid to remove and/or neutralize organic pulpal material that remains after files and reamers have been employed.

As background information reference may be had to United States Patent 4,330,278 that issued May 18, 1982 to Howard Martin, entitled "Endodontic Flow-Through Ultrasonic Instrument Holder Device". This device shows a system that includes a holder for holding an instrument used for dental work that includes a passageway by which flushing fluid can be injected into a tooth during endodontic procedures.

Another example of prior art and one that teaches the use of ultrasonics in dental technology is U.S. Patent No. 6,948,935 entitled Ultrasonic Dental Device. This patent issued to John Nusstein on September 27, 2005.

The present invention is an improvement on the basic concepts as revealed in these and other United States patents.

The invention herein is a system and a method for simultaneous liquefaction and acoustic debridgement of a tooth root canal. The system includes a manipulatible hand piece having a flow passageway therethrough. An ultrasonic energy generator is secured to the hand piece. A flexible injection tube is dimensioned and configured for insertion into a tooth root canal. A coupler is employed for removably affixing the proximal end of the injection tube to a hand piece. A pressurized source of flushing fluid is connected to the hand piece by which fluid having ultrasonic energy imposed thereon is forced into the root canal.

An important improvement in the invention herein is the provision of a system in which fluid is injected into a tooth root canal using pressure pulses that augments the dislodgement and removal of debris contained in the root canal while simultaneously the fluid pressure pulses are superimposed with ultrasonic energy.

Further the invention herein provides a system for irrigation of a tooth root canal. The system includes a manually manipulable tubular hand piece assembly including an ultrasonic generator. A removable angular tubular body terminating in an injection needle is attached to the hand piece. The angular tubular body includes an injection needle that is dimensioned and configured for insertion into a tooth root canal.

A pressure source of irrigation fluid is connected to the hand piece tubular body. The irrigation fluid has ultrasonic energy imposed on it as it passes through the hand piece. The injection needle in one embodiment is retained by a hub by which it is mounted to the hand piece. The injection needle is easily removable for replacement since normally this portion of the instrument is not reused between different patients, or if reused is thoroughly sanitized between patients. In a second embodiment the injection needle and the hub are unitary to be discarded as a unit after use for a patient or, as a unit, is thoroughly sanitized before reuse.

A more complete understanding of the invention will be obtained from the following detailed description of the preferred embodiments taken in conjunction with the drawings and attached claims.

Figure 1 is a partial cross-sectional view of a hand piece by which an irrigation fluid may be injected into a tooth root canal. The hand piece has an ultrasonic generator as a part thereof whereby the flushing fluid injected into the tooth root canal is energized with ultrasonic energy.

Figure 2 shows the hand piece as illustrated in Figure 1 with an ultrasonic generator having provision to accommodate the flow of flushing fluid therethrough.

Figure 3 is a diagrammatic view of a system for employing the invention. This figure shows a positive displacement pump that forces irrigation fluid under pulsed pressure for injecting into a tooth's root canal. This figure further shows electrical energy applied to the hand piece ultrasonic generator whereby ultrasonic energy is applied to the hand piece and to the flushing liquid.

Figure 4 is a chart illustrating the pressure of irrigation fluid injected into a tooth root canal by the systems and methods of this invention and shows pressure pulses having superimposed ultrasonic energy thereon.

Figure 5 is an enlarged elevational view, shown partly in cross-section, of a tubular body that is removably attachable to a tubular hand piece. In the embodiment of Figure 5, the removable component consists of a tubular body, a coupling nut and a needle, each independently manufactured, with an elastomeric washer to seal the end of the tubular body to the inner end of the needle.

Figure 6 is a schematic view of the complete system showing a tubular body affixed to a tubular hand piece. The system includes an ultrasonic generator secured to an angular tubular body. The angular tubular body removably receiving an injection needle by which fluid is injected into the root canal of a tooth. Connected to the hand piece is an ultrasonic control module having a first and a second control that may be employed to regulate electrical energy applied to the ultrasonic generator by which the frequency and the intensity of sonic energy is selected.

Figure 7 shows the angular tubular body as in Figure 5 but with an alternate embodiment of the injection needle. In this view the injection needle has an aperture in the sidewall that is spaced from the injection needle distal end.

Figure 8 is an exploded view of Figure 7 showing how the needle, coupling nut and an elastomeric washer can be used to removably secure the injection needle to the angular tubular body.

Figure 9 is an illustration of an alternate embodiment of the angular tubular body and injection needle wherein the injection needle and coupling nut are integrally formed and no elastomeric washer is employed.

It is to be understood that the invention that is now to be described is not limited in its application to the details of the construction and arrangement of the parts illustrated in the accompanying drawings. The invention is capable of other embodiments and of being practiced or carried out in a variety of ways. The phraseology and terminology employed herein are for purposes of description and not limitation.

**Elements shown by the drawings are identified by the following numbers:**

| | | | |
|---|---|---|---|
| 10 | Tooth | 58 | Power plug |
| 12 | Coronal area | 60 | Cylinder |
| 14 | Roots | 62 | Piston |
| 16 | Open area | 64 | Motor |
| 18 | Root canal | 66 | Shaft |
| 20 | Root canal | 68 | Crank arm |
| 22 | Apex | 70 | Piston rod |
| 24 | Hand piece | 72 | Inlet valve |
| 26 | Angular tubular body | 74 | Outlet valve |
| 28 | Flow passageway | 76 | Pressure pulses |
| 30 | Internal threads | 78 | Ultrasonic control module |
| 32 | Enlarged portion | 80 | Conductor |
| 34 | Coupling nut | 84 | Injection needle |
| 36 | Passageway | 86 | Proximal end of 26 |
| 38 | Flexible injection tube | 88 | Distal end of 26 |
| 40 | Enlarged end portion | 90 | Coupling nut |
| 42 | Distal end | 92 | Opening |
| 44 | Ultrasonic generator | 94 | Elastomeric washer |
| 46 | Passageway | 96 | Distal end of 84 |
| 48 | Power cord | 98 | Passageway |
| 50 | Reservoir | 100 | Side opening |
| 52 | Pump | 102 | First control |
| 54 | Tubular conduit | 104 | Second control |
| 56 | Supply tube | | |

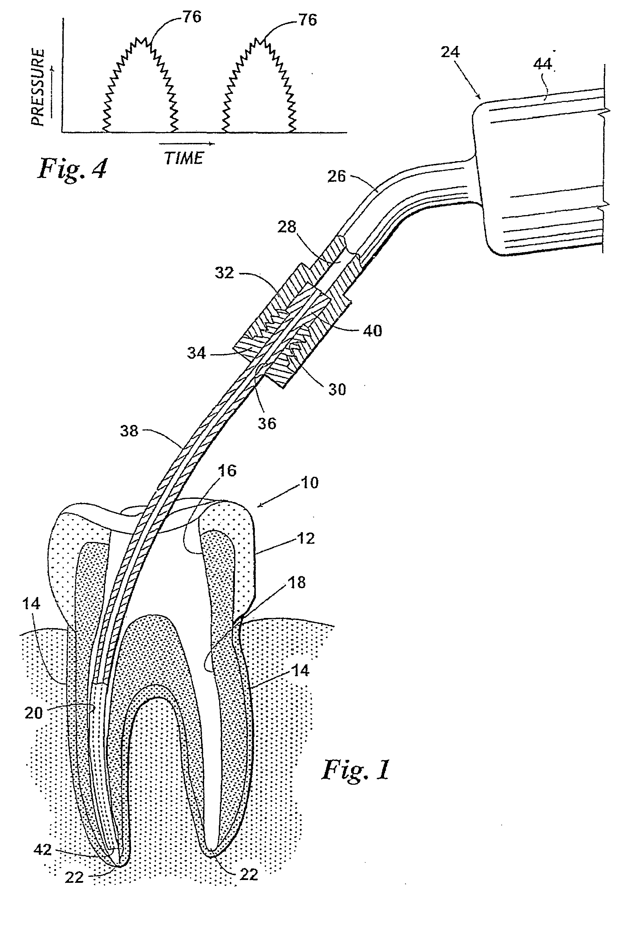

Referring to the drawings and first to Figure 1, a typical tooth 10 is illustrated in cross-section. The tooth includes a coronal area 12 and roots 14 extending therefrom. The coronal area has an open area 16 that has been drilled to provide access to the upper end of root canals 18 and 20. These root canals 18, 20 extend to the apex 22 of each of the canals.

The practice of endodontic includes, as an important part thereof, preparation of root canals 18 and 20 to receive filler material. Such filler material is typical gutta percha but other comparable materials have been developed. It is important that the root canals 18 and 20 be shaped and cleaned as thoroughly as possible to remove all organic material. Such organic material is typically pulpal material that exists as a natural portion of a tooth and by which a tooth is nourished during the formation process. Such pulpal material, if left within a root canal and entrapped by filler material, can become infected and thereby cause problems to the patient. The infection that originates within a root canal can spread to other parts of the body. For this reason, it is important, as above stated, to remove as much pulpal and other necrotic material from the confines of the root canals 18 and 20 as is possible.

The typical endodontic procedure requires the endodontist to scrape and shape the root canals in a way to remove as much as possible of pulpal material and to shape the root canal to receive filler material. However, though not shown in Figure 1, root canals 18 and 20 typically have laterally extending fissures and other irregularities in which pulpal material can become entrapped and so that it is very difficult to remove all pulpal material by physically scraping and shaping alone.

For this reason, a procedure has arisen wherein after a root canal is cleansed and shaped mechanically, the root canal is then flushed. For use in flushing a tooth root canal by the methods of this invention, a hand piece, generally indicated by the numeral 24, is employed. Hand piece 24 includes an angular tubular body portion 26 that has a flow passageway 28 therethrough. The distal end of the tubular body portion is slightly enlarged and provided with internal threads 30, the enlarged portion being indicated by the numeral 32.

Threadably received within the outer end of enlarged portion 32 is a coupling nut 34 that has passageway 36 through it. An injection tube 38 has an integral enlarged end portion 40. The flexible injection tube extends through passageway 36 in the coupling nut which engages enlarged end portion 40 so that the flexible injection tube 38 is connected to the outer end of hand piece angular tubular body portion 26. The flexible injection tube 38 is elongated and may, as indicated, be tapered towards the distal end 42 that is configured to reach as near as possible to the lower end portions of root canal 18, 20.

Hand piece 24 further includes, as a part of the body portion, an ultrasonic generator 44 that has the capacity to generate ultrasonic sound energy in the form of vibrations. The sound vibrations from ultrasonic generator 44 are coupled to the hand piece tubular body portion and to flexible injection tube 38.

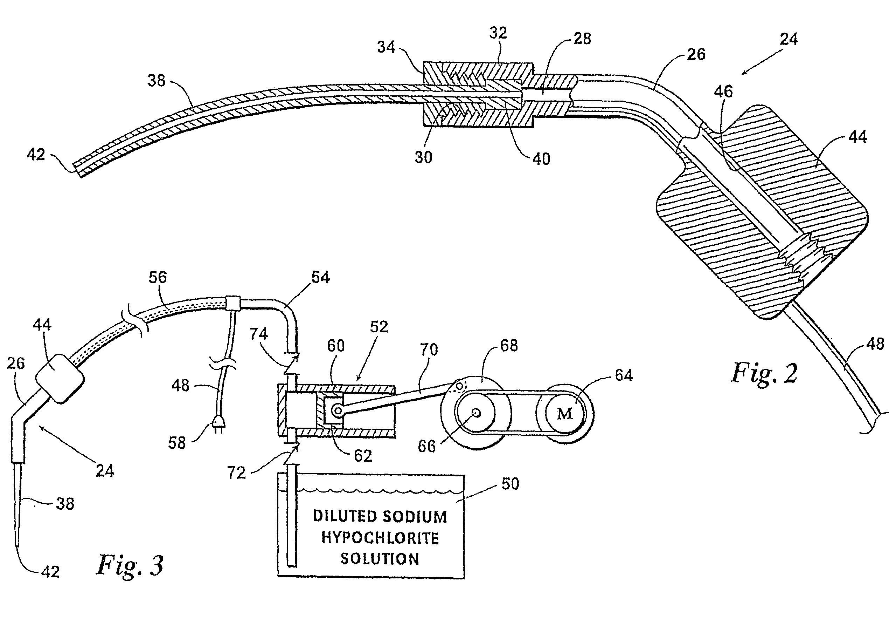

Figure 2 shows the hand piece 24 that has been described and shows a passageway 46 extending through ultrasonic generator 44. Thus, passageway 46 is in communication with the tubular body portion flow passageway 28 which in turn communicates with the flexible injection tube 38. A power cord 48 supplies electrical energy to ultrasonic generator 44.

Figure 3 shows diagrammatically the method of practicing the invention. The hand piece 24 is shown diagrammatically with flexible injection tube 38 and ultrasonic generator 44. The system is shown by which liquid may be injected through the hand piece 26 and thereby the flexible injection tube 38 for passage into the root canal of a tooth as shown in Figure 1 for purposes of flushing the tooth as a part of an endodontic procedure.

Fluid for use in flushing a tooth is contained in a reservoir 50. A typical fluid useable for flushing an endodontically prepared root canal is sodium hypochlorite, usually used as a diluted solution. A pump 52 is employed for moving fluid from reservoir 50 by way of a conduit 54 to a supply tube 56 whereby the fluid is conveyed to hand piece 24, fluid passing through ultrasonic generator 44. Supply tube 56 is shown to carry with it a conductor for electrical energy supplied by a power plug 58. While pump 52 may be a variety of different types a preferred practice of the invention employs a positive displacement pump 52 that includes a cylinder 60 and a piston 62. A motor 64 drives a shaft 66 that has a crank arm 68. Extending from crank arm 68 is a piston rod 70. Pump 52 further includes an inlet valve 72 and an outlet valve 74.

When motor 64 is energized, piston 62 is reciprocated. On each reverse stroke liquid is drawn from tank 50 through intake valve 72 and on the forward or power stroke intake valve 72 is closed and the liquid is forced from the interior of cylinder 64 through outlet valve 74. The liquid passing through conduit 54, supply tube 56, ultrasonic generator 44, angular tubular body portion 26 and out through the distal end 42 of flexible injection tube 38.

As previously stated, pump 52 may be a variety of pumps but a preferred practice of the invention employs a positive displacement pump to thereby cause the fluid flow through the system to be in a series of pressure pulses as contrasted with substantially constant pressure fluid flow. Figure 4 is a chart showing the preferred practice of the invention wherein the abscissa is time and the ordinate is pulse pressure showing that the pressure on the fluid passing into a root canal is a sequence of pulses that vary in frequency directly proportional to the rate pump 64 is rotated. Further, an important aspect of the invention is that the fluid injected into a root canal has pressure pulses having superimposed ultrasonic forces. Figure 4 shows the pressure relationship of the liquid passing into a root canal of the system of this invention in which the abscissa is time and the ordinate is fluid pressure. This figure illustrates the variation in fluid pressure as a consequence of the positive displacement pump showing a sequence of pulses created when piston 62 moves forward separated by periods of low or substantially zero pressure as piston 62 is moved rearwardly. The result is a series of rapid sequential pressure pulses. A unique feature of this invention is the provision of pressure pulses having ultrasonic energy imposed thereon.

The use of ultrasonic energy for improving endodontic procedures is documented in U.S. Patent 4,330,278. The concept herein is to provide a system of flushing or irrigating a root canal in a way to maximize removal and neutralization of organic material. Further, the solution by which the canal is washed is preferably one that removes and neutralizes necrotic tissue so as to reduce the chance that the root canal will have bacteria therein when it receives the filler material after the canal has been properly prepared. The use of sodium hypochlorite to react with necrotic tissue is well known. In addition to sodium hypochlorite other chemical solutions may be employed and sodium hypochlorite is illustrated herein as a typical solution that has the capacity to react with and neutralize necrotic material while having minimal effect on non-necrotic tissue in the body.

The rate of pressure pulses employed in the practice of the invention can vary substantially from a relatively low frequency of two or three pulses per second to a high frequency such as 50 to 100 pulses per second. The ultrasonic frequency rate can also vary but typically is at a frequency above 20,000 Hz.

The ultrasonic generator as indicated in Figures 1 and 2 is diagrammatic only since such apparatus is known in the industry and readily commercially available. The flow of fluids through the channels provided in the system forms an effective pathway for the transmission of ultrasonic energy since ultrasonic signals flow through a liquid medium with little resistance as is readily indicated by the success of sonar and other apparatus for measuring using sound energy transmitted through water.

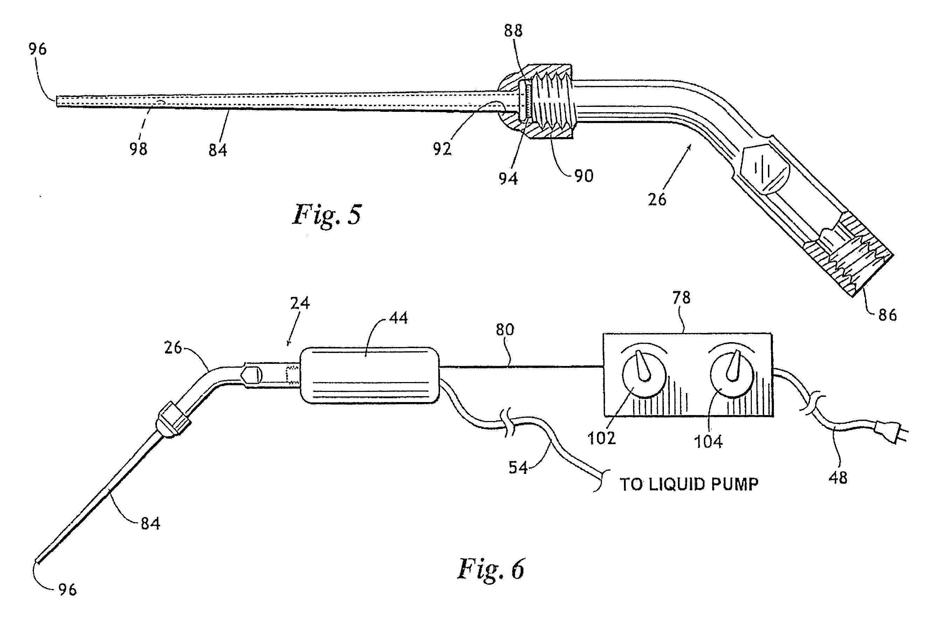

Figures 5 through 9 show alternate embodiments of the basic invention as illustrated in Figures 1 through 4.

Figure 6 shows a hand piece 24 having an angular tubular body portion 26 that includes an injection needle as described with reference to Figure 3. Figure 6 further shows liquid conduit 54 extending from a liquid pumping system, however, the liquid pumping system is not shown in Figure 6. Instead the liquid pumping system connected to conduit 54 of Figure 6 can be of a type generally disclosed in Figure 3 that includes a liquid source 50, a pump 52, a motor 64 and so forth. Any system that provides a source of liquid under pressure can be employed and can be connected to liquid conduit 54 as illustrated in Figure 6.

Figure 6 illustrates an ultrasonic control module 78 that provides an output signals on conductor 80 that functions as a power cord to ultrasonic generator 44. The manually manipulatible hand piece 24 is described as "tubular" since it provides a passageway therethrough for conducting irrigation fluid supplied to it by tubular conduit 54.

The system of Figure 6 thus illustrates a system for irrigation of a tooth root canal including the basic elements of a tubular hand piece 24, a source of irrigation fluid 54, an ultrasonic generator 44 forming a part of the tubular hand piece 24, an ultrasonic control module 78 controlling the frequency and intensity of ultrasonic generator 44, an angular tubular body portion 26 extending from ultrasonic generator 44 and an injection needle 84 extending from angular tubular body 26.

Figure 5 shows in enlarged detail an example of the angular tubular body 26. The proximal end 86 illustrates a female threaded arrangement by which the angular tubular body 26 can be attached to ultrasonic generator 44. This is by example only as the threaded end portion at the proximal end 86 of the angular tubular body 26 could be a male thread.

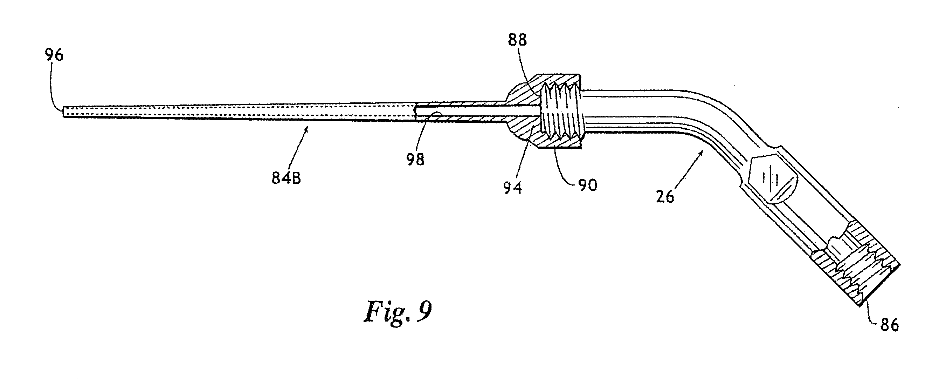

The distal end 88 of angular tubular body 26 is shown with a male thread which, also is optional since it could be a female thread, for removably attachment of injection needle 84. In the illustrated embodiment of Figure 5, the thread at the distal end 88 of angular tubular body 26 is shown as a male thread. The injection needle 84 is secured to angular tubular body 26 by means of a coupling nut 90. In the embodiment of Figure 5 coupling nut 90 is a separately manufactured component that has an opening 92 therein that receives injection needle 84. In the embodiment of Figure 9, coupling nut 90 and injection needle 84 are integrally formed, that is, they are one piece that is easily removable from angular tubular body 26. Further, in Figure 5 an elastomeric washer 94 is shown between the proximal end of injection needle 84 and the distal end 88 of angular tubular body 26. In the embodiment of Figure 9 the components are constructed in a manner that eliminates the need for an elastomeric washer.

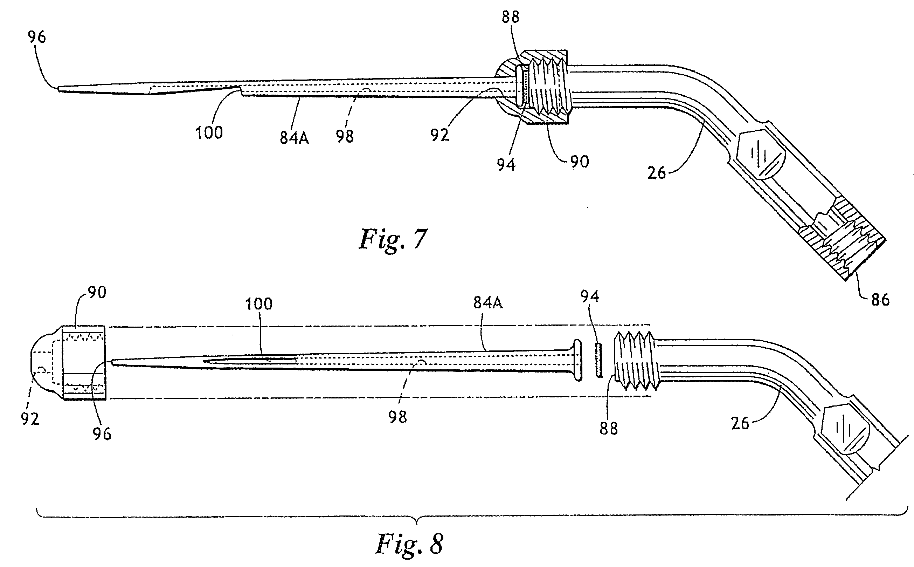

In the embodiment of Figures 5 and 9 injection needle 84 has a distal end 96 that has an opening therein communicating with the internal passageway 98 through the needle. With this embodiment fluid flowing through angular tubular body 26 flows out the distal end 96 of injection needle 84. Figures 7 and 8 illustrate an alternate embodiment in which the injection needle 84A is different in that the internal tubular passageway 98 terminates short of the distal end 96 and passageway 98 communicates with a side opening 100. Some endodontic practitioners prefer the embodiment of injection needle 84A as shown in Figures 7 and 8 compared to the injection needle 84 in Figures 5 and 9 since the embodiment providing the sidewall opening prevents a high flow rate of fluid from being directed to the apical area of a tooth. By employing an injection needle with a side wall opening the possibility of fluid being injected into a patient's body beyond the apex of the tooth is reduced. Other than the use of an injection needle 84A having a sidewall outlet opening all other features of the embodiment of Figures 7 and 8 are in conformity with that described with reference to Figure 5.

Figures 7, 8 and 9 all show the injection needle 84 as being tapered. However, this is optional. Injection needle 84 can be tubular and of uniform or substantially uniform diameter. Further, when the injection needle 84 is tubular it may easily be configured to be flexible as suggested with reference to Figure 2.

Figure 9 has been included to illustrate that the angular tubular body 26 that is affixed to hand piece 24 can be formed of two threadably attachable portions. If desired the angular tubular body 26 and injection needle 84 could be unitary, that is, all one portion. Determining how much of the system for irrigating a tooth root canal of this invention is made unitary depends on the philosophy of the manufacturer as to which portions are to be made to be dispensable, that is, which portions are to be used only once to thereby reduce the risk of transferring infection from one patient to another and also to thereby reduce requirements for sterilization. How many or how few separate components are employed in assembly of the mechanism for practicing the invention herein is not a limitation of the invention but is deemed to be merely a matter of choice of a manufacturer.

In Figure 6 ultrasonic control module 78 is illustrated to include a first control 102 and a second control 104. One of the controls, such as 102, can be employed to control the ultrasonic frequency output of ultrasonic generator 44 while the second control 104 may be used to regulate the intensity of the ultrasonic energy imposed on the irrigation fluid as it passes through ultrasonic generator 44. The practice of this invention does not demand the use of an ultrasonic control module 78 as a manufacturer may make a predetermination of the optimum frequency and intensity of ultrasonic generator 44. In the same way the pressure pulses and pressure frequencies of the irrigation fluid as provided by the pump system 52 as shown in Figure 3 and as is illustrated in the chart of Figure 4 may be selectable or they may be fixed, according to the preferences of a manufacturer.

While the invention has been described with a certain degree of particularity, it is manifest that many changes may be made in the details of construction and the arrangement of components without departing from the spirit and scope of this disclosure. It is understood that the invention is not limited to the embodiments set forth herein for purposes of exemplification, but is to be limited only by the scope of the attached claims, including the full range of equivalency to which each element thereof is entitled.

## Claims

1. A system for use in simultaneous liquefaction and acoustic debridgement of a tooth root canal comprising:
a graspable and manipulatible elongated hand piece having a proximal end and a distal end and a flow passageway therethrough;
an ultrasonic energy generator secured to said hand piece proximal end;
a somewhat flexible injection tube having a proximal end and a distal end portion that is dimensioned and configured for insertion into a tooth root canal;
a threaded coupler for removably affixing said proximal end of said injection tool to said distal end of said hand piece; and
a pressurized source of flushing fluid connected to said hand piece proximal end by which fluid having ultrasonic energy superimposed thereon is forced into the root canal.

2. A system for use in simultaneous liquefaction and acoustic debridgement of a tooth root canal according to Claim 1 wherein said discharge injection tube extends at an angle relative to said elongated hand piece.

3. A system for use in simultaneous liquefaction and acoustic debridgement of a tooth root canal according to Claim 1 or Claim 2 wherein said pressurized fluid source produces pulsed fluid pressure upon which said ultrasonic energy is superimposed.

4. A device for performing dental procedures, comprising:
a hand held piece comprising:
a threaded housing for attaching a shaft assembly to an ultrasonic generator;
an angled member connected to said threaded housing and having a bore passing therethrough;
a hub attached to an end of said angled shaft opposite said threaded housing; and
an aperture passing through the said shaft;
a flexible injection tube for insertion in a tooth root canal;
an ultrasonic generator in contact with hand piece; and
a source of tissue dissolving liquid under pulsed pressure.

5. The device of Claim 4 further comprising:
a reservoir for storing said liquid; and
a means for connecting said hand piece to said reservoir.

6. The device of Claim 4 or Claim 5 wherein said angled member comprises an angle of about 30° to 90°.

7. A system for irrigation of a tooth root canal, comprising:
a manually manipulatible tubular hand piece assembly including an ultrasonic generator and a removable angular tubular body terminating in an injection needle dimensioned and configured for insertion into a tooth root canal; and
a pressure source of irrigation fluid connected to said hand piece tubular body, the irrigation fluid having ultrasonic energy imposed thereon as it passes through said hand piece.

8. A system for irrigation of a tooth root canal according to Claim 7 wherein said tubular hand piece is elongated and said injection needle extends at an angle relative to said elongated hand piece.

9. A system for irrigation of a tooth root canal according to Claim 7 or Claim 8 wherein said pressure source of irrigation fluid produces pulsed fluid pressure upon which said ultrasonic energy is superimposed.

10. A system for irrigation of a tooth root canal according to any one of Claims 7 to 9 wherein said hand piece assembly includes an elongated tubular body portion having said ultrasonic generator and an angled tubular body portion threadably attachable thereto, the angled tubular body portion having said injection needle as a part thereof.

11. A system for irrigation of a tooth root canal according to any one of Claims 7 to 10 wherein said injection needle is a removably attachable portion of said angled tubular body portion of said hand piece assembly.

12. A system for irrigation of a tooth root canal according to any one of Claims 7 to 11 wherein said pressure source of irrigation fluid includes a source of diluted sodium hypochlorite solution.

13. A system for irrigation of a tooth root canal according to any one of Claims 7 to 12 wherein said pressure source of irrigation fluid includes a reservoir of irrigating liquid and a positive displacement pump having an inlet connected to said source of irrigating liquid and an outlet connected to an inlet of said tubular hand piece assembly.

14. A system for irrigation of a tooth root canal according to any one of Claims 9 to 13 wherein said pulsed fluid pressure is supplied at a selectable pulse rate.

15. A system for irrigation of a tooth root canal according to any one of Claims 9 to 14 wherein said pulsed fluid pressure is supplied at a selectable pulse rate and wherein ultrasonic generator is controllable to provide selectable ultrasonic frequencies.
